# EUROPEAN PATENT APPLICATION

(11) **EP 2 581 191 A1**
(43) Date of publication of application: **17.04.2013**
(21) Application number: 11795608.6
(22) Date of filing: 07.06.2011
(51) Int. Cl.: B29C 33/02, B29C 45/73, B29C 45/78

(54) **MANUFACTURING METHOD FOR DIE**

(30) Priority: 14.06.2010 JP 2010135464
(71) Applicant: Polyplastics Co., Ltd., Tokyo 108-8280 (JP)
(72) Inventor: TAKASHIMA, Masato, Fuji-shi Shizuoka 416-8533 (JP); MIYASHITA, Takayuki, Fuji-shi Shizuoka 416-8533 (JP); HIROTA, Shinichi, Fuji-shi Shizuoka 416-8533 (JP)
(74) Representative: Lux, Berthold
(86) International application number: PCT/JP2011/063072
(87) International publication number: WO 2011/158700

(57) **Abstract**

Provided is a method for manufacturing a mold for manufacturing a molded article, by which not only is the occurrence of flash suppressed but also the crystallization of the surface is sufficiently accelerated when the mold temperature during the molding of a crystalline thermoplastic resin is set at T_{c2}-100°C or less. Based on a relationship between crystallization rate and resin temperature of the crystalline thermoplastic resin, a temperature at which the crystalline thermoplastic resin filled into a mold has a sufficiently fast crystallization rate near a cavity surface and a retention time during which the crystalline thermoplastic resin in the mold is retained at a temperature equal to at least at a temperature at which the resin has the sufficiently fast crystallization rate are derived, such that the derived temperature and the derived retention time allow the molded article to have a surface whose crystallinity falls within a desired range, and a heat-insulating layer which, when mold temperature is T_{c2}-100°C or less, allows a time, during which temperature near surface of the mold cavity is retained at no less than the derived temperature, to fulfill the derived retention time is provided.

## Description

### TECHNICAL FIELD

The present invention relates to a method for manufacturing a mold.

### BACKGROUND ART

Crystalline thermoplastic resins tend to be excellent in properties such as mechanical strength as compared to noncrystalline thermoplastic resins, and are used in a wide range of applications such as outer plates of home appliances and exterior and interior parts of automobiles.

The crystalline thermoplastic resin is excellent in properties, as described above, but has a low crystallization rate and a high glass transition temperature. Therefore, the crystal structure tends to be locally uneven. Therefore, the surface of a molded article tends to suffer nonuniformity in terms of both the appearance and structure.

In order to perform the continuous molding of a molded article having a crystalline thermoplastic resin as a raw material with stability while maintaining stable quality, it is necessary to accelerate crystallization. For accelerating crystallization, for example, a molded article is produced under the condition of a high mold temperature that exceeds 100°C.

However, if the mold temperature is high, there arises the problem that a large amount of flash is generated at the mold parting surface and the like. When molding is performed at a low mold temperature (e.g. 100°C or less), not only the problem of generation of flash can be solved, but also complexity is eliminated because temperature control with water can be used in place of temperature control with oil. Thus, the condition of the mold temperature is preferably 100°C or less.

Incidentally, when molding is performed under the condition of a low mold temperature, there arises the problem that the surface hardness does not increase and thus extraction from a mold becomes difficult because crystallization of the surface of a molded article does not proceed, or the problem that post-shrinkage becomes significant, so that surface roughness or a dimensional change/warp is caused owing to an environmental temperature used after molding.

For polyphenylene sulfide resins, for example, a method is known in which various kinds of crystallization accelerators and plasticizers are blended for solving the above-mentioned problems by increasing the crystallization rate (see, for example, Patent Document 1). Under present circumstances, however, there does not exist a technique by which crystallization is sufficiently accelerated when the mold temperature is set at 100°C or less.

Patent Document 1: Japanese Unexamined Patent Application, Publication No. 2003-335945

### DISCLOSURE OF THE INVENTION

### Problems to be Solved by the Invention

The present invention has been made in order to solve the aforementioned problems, and an object thereof is to provide a method for manufacturing a mold for manufacturing a molded article, by which not only is the occurrence of flash suppressed but also the crystallization of the surface is sufficiently accelerated when the mold temperature during the molding of a crystalline thermoplastic resin is set at T_{c2}-100°C or less.

### Means for Solving the Problems

The present inventors carried out diligent research in order to solve the above-mentioned problems. As a result, it was found that the above-mentioned problems could be solved by deriving, based on a relationship between crystallization rate and resin temperature of a crystalline thermoplastic resin, a temperature at which the crystalline thermoplastic resin filled into a mold has a sufficiently fast crystallization rate near mold cavity surface and a retention time during which the crystalline thermoplastic resin in the mold is retained at a temperature equal to at least a temperature at which the resin has a sufficiently fast crystallization rate, such that the derived temperature and the derived retention time allow the molded article to have a surface whose crystallinity falls within a desired range, and providing a heat-insulating layer which, when mold temperature is T_{c2}-100°C or less, allows a time, during which temperature near surface of the mold cavity is retained at no less than the derived temperature, to fulfill the derived retention time. More specifically, the present invention provides the following.

According to a first aspect of the invention, there is provided a method for manufacturing a mold for molding a molded article made of a resin composition containing a crystalline thermoplastic resin, the method including: deriving, based on a relationship between crystallization rate and resin temperature of a crystalline thermoplastic resin, a temperature at which the crystalline thermoplastic resin filled into a mold has a sufficiently fast crystallization rate near a mold cavity surface and a retention time during which the crystalline thermoplastic resin in the mold is retained at a temperature equal to at least a temperature at which the resin has a sufficiently fast crystallization rate, such that the derived temperature and the derived retention time allow the molded article to have a surface whose crystallinity falls within a desired range; and providing a heat-insulating layer which, when mold temperature is T_{c2}-100°C or less, allows a time, during which temperature near surface of the mold cavity is retained at no less than the derived temperature, to fulfill the derived retention time.

According to a second aspect of the invention, in the method for manufacturing a mold as described in the first aspect, the mold temperature is 100°C or less; and when the crystalline thermoplastic resin is a polyarylene sulfide-based resin, the temperature near the cavity surface is 150°C or higher, and the retention time is 0.1 seconds or longer.

According to a third aspect of the invention, the method for manufacturing a mold as described in the first or second aspect further includes deriving a relationship between the temperature near the cavity surface and the retention time by heat conduction analysis, and determining material, placement position and shape of the heat-insulating layer based on the relationship, wherein the heat conduction analysis is performed by using a mold having a cavity on the surface of which a heat-insulating layer is formed, and by using as parameters specific gravity, specific heat, thermal conductivity and thermal diffusivity of material constituting the mold and of the crystalline thermoplastic resin.

According to a fourth aspect of the invention, in the method for manufacturing a mold as described in any one of the first to third aspects, the heat-insulating layer has a thermal conductivity of 0.3 W/m.K or less and a thickness of 60 µm or greater.

According to a fifth aspect of the invention, in the method for manufacturing a mold as described in any one of the first to fourth aspects, the heat-insulating layer contains at least one resin selected from polybenzoimidazole, polyimide and polyether ether ketone.

According to a sixth aspect of the invention, in the method for manufacturing a mold as described in any one of the first to fifth aspects, the heat-insulating layer has a metal layer on the surface thereof.

According to a seventh aspect of the invention, in the method for manufacturing a mold as described in any one of the first to sixth aspects, the heat-insulating layer contains a ceramic.

According to an eighth aspect of the invention, in the method for manufacturing a mold as described in the seventh aspect, the ceramic is silicon dioxide.

According to a ninth aspect of the invention, in the method for manufacturing a mold as described in the seventh aspect, the ceramic is constituted by porous zirconia.

According to a tenth aspect of the invention, in the method for manufacturing a mold as described in any one of the first to ninth aspects, the mold temperature is T_{c1} or less.

According to an eleventh aspect of the invention, there is provided a molded article of a polyarylene sulfide-based resin having a crystallinity of 30% or more, the molded article being obtained using a mold prepared by the method described in any one of the first to tenth aspects.

### Effects of the Invention

By using a mold made according to the present invention, not only can be the occurrence of flash suppressed but also the crystallization of the surface of the molded article can be sufficiently accelerated when the mold temperature during the molding of a crystalline thermoplastic resin is set at T_{c2}-100°C or less.

### BRIEF DESCRIPTION OF THE DRAWINGS

FIG. 1 is a view showing a relationship between the temperature of a resin near the surface of a cavity and the retention time during which the resin is retained within a mold.
FIG. 2 is a view schematically showing the cross section of a mold in which a heat-insulating layer is formed, wherein FIG. 2A is a schematic view of the cross section of a divided mold in which a heat-insulating layer is formed on the entire surface of a cavity, FIG. 2B is a schematic view of the cross section of a divided mold in which a heat-insulating layer is formed on a part of the surface of a cavity, and FIG. 2C is a schematic view of the cross section of a divided mold in which a metal layer is formed on a heat-insulating layer.
FIG. 3 is a schematic view of the cross section of a divided mold, in which a heat-insulating layer is formed, for illustrating the thickness of a heat-insulating layer, the thickness of a cavity and the thickness of a mold.
FIG. 4 is a view showing a relationship between the crystallization rate and the temperature of a crystalline resin used in Example.
FIG. 5 is a schematic view of the cross section of a mold used in Example.

### PREFERRED MODE FOR CARRYING OUT THE INVENTION

An embodiment of the present invention will be explained in detail hereinafter, but the present invention is not limited to the following embodiment.

The method for manufacturing a mold according to the present invention includes: deriving, based on a relationship between crystallization rate and resin temperature of a crystalline thermoplastic resin, a temperature at which the crystalline thermoplastic resin filled into a mold has a sufficiently fast crystallization rate near a mold cavity surface and a retention time during which the crystalline thermoplastic resin in the mold is retained at a temperature equal to at least a temperature at which the resin has a sufficiently fast crystallization rate, such that the derived temperature and the derived retention time allow the molded article to have a surface whose crystallinity falls within a desired range; and providing a heat-insulating layer which, when mold temperature is T_{c2}-100°C or less, more preferably T_{c1} or less, allows a time, during which temperature near the surface of the mold cavity is retained at no less than the derived temperature, to fulfill the derived retention time. Here, T_{c2} refers to a crystallization temperature at which a resin is cooled from a molten state and solidified, and T_{c1} refers to a temperature at which a resin molded in a state of insufficient crystallinity is crystallized when heating the resin.

By using a mold obtained by the method of the present invention, the crystallinity of the surface of a molded article can be increased to a desired value even if the mold temperature is set at T_{c2}-100°C or less. This is because a temperature, near a mold cavity surface, of a crystalline thermoplastic resin filled into a mold, and a retention time during which the crystalline thermoplastic resin in the mold is retained at a temperature equal to at least a temperature at which the resin has a sufficiently fast crystallization rate can be derived based on a relationship between crystallization rate and resin temperature of the crystalline thermoplastic resin, the derived temperature and the derived retention time by which an effect as described above is obtained.

Hereinafter, a method for manufacturing a mold according to the present invention will be explained further in detail. Determination of resin material and the like

First, a resin material to be molded should be selected. The resin material is not particularly limited as long as it is a crystalline thermoplastic resin, and conventionally known one can be selected.

Among crystalline thermoplastic resins, polyarylene sulfide resins (especially polyphenylene sulfide resins) are particularly significantly associated with the problem of flash and the problem of low crystallinity of the surface of a molded article. Namely, it is difficult to mold a polyarylene sulfide resin such that the crystallinity of the surface of a molded article is sufficiently increased when the mold temperature is set at 100°C or less. However, by using a mold obtained by the method of the present invention, the crystallinity of the surface of a molded article can be sufficiently increased when the mold temperature is set at 100°C or less even though a polyarylene sulfide resin is used as a resin material. Here, as a polyarylene sulfide resin, for example, the polyarylene sulfide resin and the modified product of a polyarylene sulfide resin described in Japanese Unexamined Patent Application, Publication No. 2009-178967 are mentioned.

Even if a resin other than the polyarylene sulfide resin, such as a polyether ether ketone resin, a polyether ketone resin, a polyphenylene ether resin or an aromatic polyamide resin, which has a slow crystallization rate and with which the crystallization of the surface of a molded article is hard to be increased, is used, the crystallinity of the surface of the molded article can be sufficiently increased when the mold temperature is set at T_{c2}-100°C or less by using a mold obtained by the method of the present invention.

The problem of flash and the problem of low crystallinity of the surface of a molded article become more significant as the content of a crystalline thermoplastic resin in a resin composition containing the crystalline thermoplastic resin increases, but even in this case, the present invention can sufficiently increase the crystallinity of the surface of the molded article when the mold temperature is set at T_{c2}-100°C or less. For example, even if a resin composition made of a crystalline thermoplastic resin is used, the crystallinity of the surface of a molded article can be sufficiently increased when the mold temperature is set at T_{c2}-100°C or less. A resin composition containing a crystalline thermoplastic resin, with other resins, and conventionally known additives such as an antioxidant, an inorganic filler and a stabilizer blended in the crystalline thermoplastic resin, may be used.

After the resin material is determined, a desired crystallinity of the surface of the molded article is determined.

For the desired crystallinity, a preferred value can be arbitrarily determined depending on, for example, a use purpose of the molded article, and the like.

### Placement of heat-insulating layer

For placement of a heat-insulating layer, first, based on a relationship between crystallization rate and resin temperature of a crystalline thermoplastic resin, a temperature at which the crystalline thermoplastic resin filled into a mold has a sufficiently fast crystallization rate near a mold cavity surface and a retention time during which the crystalline thermoplastic resin is retained at a temperature equal to at least a temperature at which the resin has the sufficiently fast crystallization rate within the mold are derived such that the derived temperature and the derived retention time allow the crystallinity of a molded article to fall within a desired range (first step).

Then, a heat-insulating layer which, when the mold temperature is T_{c2}-100°C or less, allows a time, during which the temperature near surface of the mold cavity is retained at no less than the derived temperature, to fulfill the derived retention time is provided on the mold (second step). Hereinafter, the method for manufacturing a mold according to the present invention will be explained for each of the first step and the second step.

### First step

In the first step, the derivation method is not particularly limited as long as based on a relationship between crystallization rate and resin temperature of a crystalline thermoplastic resin, a temperature at which the resin has a sufficiently fast crystallization rate near the surface of the cavity and a retention time during which the resin is retained at a temperature equal to at least a temperature at which the resin has the sufficiently fast crystallization rate within the mold can be derived such that a specific condition is satisfied. For example, the above-mentioned relationship can be derived by the following method.

From the relationship between crystallization rate and resin temperature of the crystalline thermoplastic resin, a temperature at which the resin has a sufficiently fast crystallization rate. The temperature at which the resin has a sufficiently fast rate refers to a minimum resin temperature at which the crystallization rate is faster than 1/1000, preferably faster than 1/100 of the fastest crystallization rate. When a relationship between crystallization rate and resin temperature of the crystalline thermoplastic resin is unknown, the above-mentioned relationship should be derived by a conventionally known method.

Derivation of the retention time will now be explained. A relationship between a retention time during which the crystalline thermoplastic resin filled into a mold is retained within the mold and a crystallinity of the surface of a molded article is derived while a temperature of the resin near the cavity surface is the temperature at which the crystallinity is sufficiently fast. From the result of this derivation process, a retention time required for achieving a desired crystallinity is determined.

Here, the retention time can be determined by, for example, the following method.

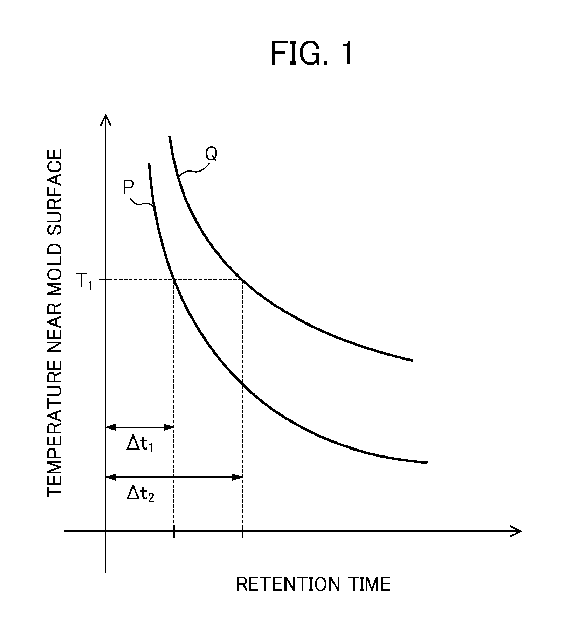

First, the mold temperature is set at a temperature higher than T_{c2}-100°C and close to T_{c2}-100°C (e.g. T_{c2}-90°C), and a relationship between the resin temperature near the cavity surface and the retention time within the mold is derived to determine a crystallinity. A relationship between the resin temperature near the cavity surface and the retention time of the resin retained within the mold is shown in FIG. 1 (solid line P). Here, assume that the crystallinity of the surface of the molded article does not fall within a desired range.

Then, for suppressing a decrease in resin temperature near the cavity surface to increase the crystallinity of the surface of the molded article, the mold temperature is changed to a higher temperature, or a heat-insulating layer is formed on the mold. Then, in the same manner as described above, a relationship between the resin temperature near the cavity surface and the retention time of the resin retained within the mold is derived to determine a crystallinity. A relationship between the resin temperature near the cavity surface and the retention time of the resin retained within the mold is shown in FIG. 1 (solid line Q). Here, assume that the crystallinity of the surface of the molded article falls within a desired range.

A temperature at which the crystallization rate is sufficiently fast, which is derived from a relationship between the crystallization rate and resin temperature of the crystalline thermoplastic resin, is designated as T₁ and shown in FIG. 1. The time during which the resin temperature near the cavity surface is retained at a temperature equal to at least T₁ is increased by changing the mold temperature to a higher temperature or forming a heat-insulating layer on the mold (Δt₂ > Δt₁). Δt₂ can be employed as the retention time. Namely, if the retention time is Δt₂ or longer, the crystallinity of the surface of the molded article falls within a desired range. A threshold of the retention time as to whether or not the crystallinity falls within a desired range exists between Δt₂ and Δt₁.

### Second step

In the second step, a heat-insulating layer, which allows a retention time, during which the resin temperature near the cavity surface is retained at a temperature equal to at least T₁, to be satisfied is placed on the mold. The material, shape and placement position and the like of the heat-insulating layer may be determined by any method, but can be determined by, for example, the following method.

The material, placement position and shape of the heat-insulating layer can be derived based on a relationship between the temperature of the resin near the cavity surface and the retention time, with the relationship being derived through heat conduction analysis.

Here, heat conduction analysis is performed by using a mold, in which a heat-insulating layer is formed on the surface of a cavity, and by using as parameters the specific gravity, the specific heat, the thermal conductivity and the thermal diffusivity of a material constituting the mold and the crystalline thermoplastic resin.

First, parameters used for performing heat conduction analysis will be explained. As described above, a heat-insulating layer is used for suppressing a reduction in the temperature of a resin near the cavity surface. Here, for considering transfer of heat of the resin that has flowed into a mold, it is necessary to consider the thermal conductivity and the thermal capacity of the heat-insulating layer and the like. Therefore, it is necessary to use as parameters the specific gravity, and the thermal properties such as the specific heat, the thermal conductivity and the thermal diffusivity of a material constituting the mold and the crystalline thermoplastic resin. When heat conduction analysis is performed, these parameters are input.

Next, a mold in which a heat-insulating layer is formed on the cavity surface will be explained. It is necessary to perform heat conduction analysis after determining how the heat-insulating layer is provided within the mold. This is because the degree of heat transfer varies depending on how the heat-insulating layer is provided. However, the degree of specificity to which how the heat-insulating layer is provided within the mold can be appropriately changed according to a required degree of accuracy.

Hereinafter, determination of placement, the material and the like of the heat-insulating layer will be more specifically explained.

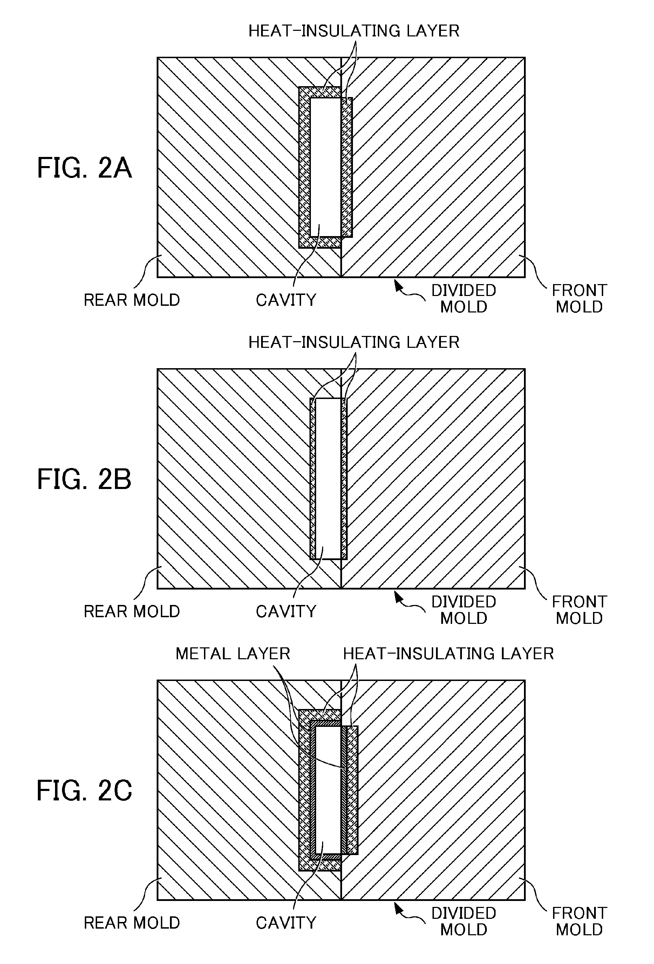

Examples include a mold in which a heat-insulating layer is formed on the entire surface of a cavity, and FIG. 2A shows a schematic view of the cross section of a divided mold in which a heat-insulating layer is formed on the entire surface of a cavity. By providing a heat-insulating layer over the cavity, the molded article can be made to have a desired crystallinity at the entire surface. By ensuring that the heat-insulating layer and the metal of the mold contact each other at the parting surface of the divided mold (in FIG. 2A, the heat-insulating layer of the lower-side mold contacts the metal of the upper-side mold), a resin entering the parting surface of the mold is immediately solidified, so that no flash occurs.

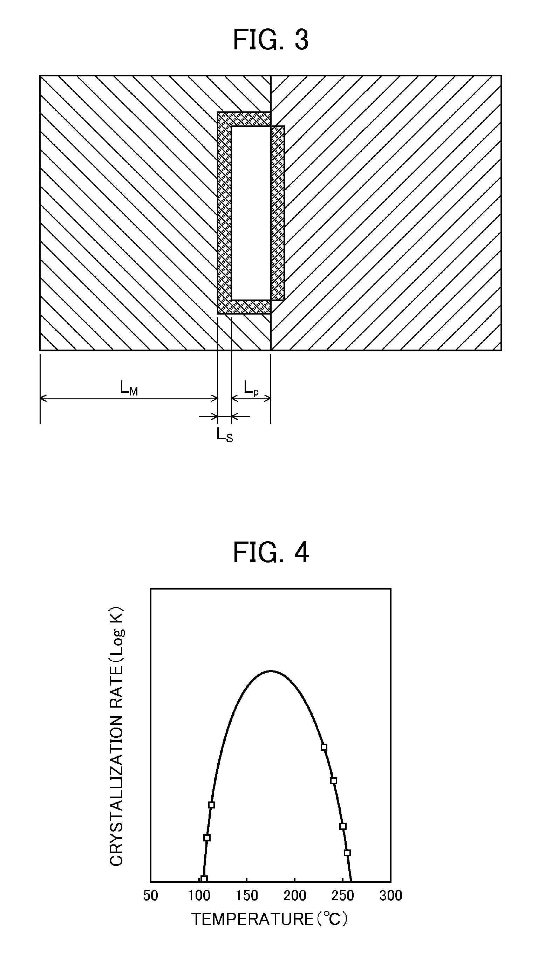

If it is determined that heat conduction analysis is performed using a mold as in FIG. 2A, the thickness L_{S} of the heat-insulating layer (in a direction perpendicular to a parting surface of the divided mold), the thickness L_{M} of the mold in the thickness direction of the heat-insulating layer and the thickness L_{P} of the cavity in the thickness direction of the heat-insulating layer will be determined. These values are also input when heat conduction analysis is performed. The positions of L_{S}, L_{M} and L_{P} are shown in FIG. 3.

In FIG. 2A, the heat-insulating layer is formed on the entire surface of the cavity, but the heat-insulating layer may be formed on a part of the cavity surface as shown in FIG. 2B.

Other examples include a mold in which a metal layer is formed on a heat-insulating layer of the mold in which the heat-insulating layer is formed on the entire surface of a cavity, and FIG. 2C shows a schematic view of the cross section of a divided mold in which a metal layer is formed on the heat-insulating layer.

By forming a metal layer on the heat-insulating layer, the wear resistance of the cavity surface is improved. Particularly, when an inorganic filler such as glass fibers is blended, the cavity surface is easily worn. Therefore, when a resin composition in which glass fibers or the like are blended is used, it is preferable to use a mold as shown in FIG. 2C.

When a metal layer is present on the entire surface of the cavity, it becomes necessary to increase the thickness of the heat-insulating layer, or the like, because the thermal conductivity of the metal layer is high.

If it is determined that heat conduction analysis is performed using a mold as shown in FIG. 2C, the thickness L_{S} of the heat-insulating layer (in a direction perpendicular to a parting surface of the divided mold), the thickness L_{M} of the mold in the thickness direction of the heat-insulating layer, the thickness L_{P} of the cavity in the thickness direction of the heat-insulating layer and the thickness L_{HI} of the metal layer in the thickness direction of the heat-insulating layer will be determined. These values are input when heat conduction analysis is performed.

Heat conduction analysis is performed using input conditions such as parameters determined in the manner described above. The relationship between the resin temperature near the cavity surface and the retention time is derived for each molding condition while changing molding conditions such as the resin temperature, the mold temperature and the ejection rate. If the time during which the resin temperature near the cavity surface is retained at a temperature equal to at least a temperature at which the crystallization rate is sufficiently fast is Δt₂ or more, the molded article has a surface having a desired crystallinity. In this way, a heat-insulating layer that satisfies a specific condition can be determined.

### heat-insulating layer

The heat-insulating layer can be determined in the manner as described above, but before explaining a method of actually forming the heat-insulating layer on a mold, the heat-insulating layer that satisfies a specific condition, and like will be briefly explained.

The heat-insulating layer preferably has a thermal conductivity of 0.3 W/m.K or less and a thickness of 60 µm or more. If the heat-insulating layer that satisfies these conditions, the time, during which the resin is retained in the mold at a temperature at which the resin has a fast crystallization rate easily reaches Δt₂ or more.

Examples of the material having a thermal conductivity of 0.3 W/m.K or less and such a heat resistance that a high temperature during molding can be endured include epoxy, polyimide, polybenzoimidazole, polyimide and polyether ether ketone.

As described above, a metal layer can be placed on the heat-insulating layer. As the metal layer, a plate of aluminum, SUS or the like is preferably used. As a method for forming a metal layer on a heat-insulating layer, a conventionally known lamination method or the like can be employed. The thickness of the metal layer depends on the type of a metal contained in the metal layer, but is preferably 0.1 mm or less. When a metal plate is used as described above, the thickness of the heat-insulating layer is required to be increased as described above, and is set to, for example, 10 mm or more, more preferably 20 mm or more.

A thin film-shaped metal layer can be formed on the heat-insulating layer using a conventionally known method for forming a plated film, such as a sputtering method or an ion plating method. Since the plated film is very thin, the thickness of the heat-insulating layer is preferably 60 µm or more unlike the case of using a metal plate.

The method for forming a heat-insulating layer on the inner surface of a metal portion of a mold is not particularly limited. It is preferable to form a heat-insulating layer on the inner surface of a mold by, for example, the following method.

The methods include a method in which a solution of a polymer precursor such as a polyimide precursor, which can form a polymer heat-insulating layer, is applied to the inner surface of a metal portion of a mold, heated to evaporate a solvent, and overheated to be formed into a polymer, whereby a heat-insulating layer such as a polyimide film is formed, a method in which a monomer of a heat-resistant polymer, for example pyromellitic anhydride and 4,4-diaminodiphenyl ether, are subjected to vapor deposition polymerization, and a method in which a die, in which a portion corresponding to the cavity surface is made of a heat-insulating plate, is prepared, and the die is mounted on a main mold. Alternatively, concerning a plane mold, mention is made of a method in which a polymer heat-insulating film is attached to a desired portion of a mold by an appropriate bonding process or with an adhesive tape-like polymer heat-insulating film to form a heat-insulating layer. Formation of a heat-insulating layer may be performed by a method in which a resin forming a heat-insulating layer is electro-deposited on a mold. A metal layer can be formed on the heat-insulating layer or the surface of the heat-insulating plate for the purpose of imparting durability for prevention of flawing.

For the heat-insulating layer, a ceramic material can also be used. Since the surface of the ceramic is excellent in wear resistance, it is not necessary to place a metal layer as described above on a heat-insulating layer made of ceramic. For the ceramic, porous zirconia containing air bubbles therein or silicon dioxide is preferably used. Among them, a heat-insulating layer constituted by porous zirconia is formed mainly of zirconia, and is therefore highly durable to a pressure applied on the heat-insulating layer during injection molding. Therefore, defects of the heat-insulating layer caused by the pressure are hard to occur. Thus, the number of interruptions of molding in the course of injection molding decreases, so that productivity of injection-molded articles is improved.

The zirconia is not particularly limited, and may be any of stabilized zirconia, partially stabilized zirconia and unstabilized zirconia. The stabilized zirconia is such that cubic-crystal zirconia is kept stable even at room temperature, and is excellent in mechanical properties such as strength and toughness and wear resistance. The partially stabilized zirconia refers to a state in which tetragonal-crystal zirconia partly remains even at room temperature, wherein martensitic transformation occurs from the tetragonal crystal to the monoclinic crystal upon reception of external stress, growth of cracks spread by an action particularly of tensile stress is suppressed, and toughness to breakage is high. The unstabilized zirconia refers to zirconia that is not stabilized by a stabilizer. At least two types selected from stabilized zirconia, partially stabilized zirconia and unstabilized zirconia may be combined and used.

As a stabilizer contained in stabilized zirconia and partially stabilized zirconia, a conventionally known general stabilizer can be employed. Examples thereof include yttria, ceria and magnesia. The used amount of the stabilizer is not particularly limited, and can be appropriately determined according to the intended use, the material used and the like.

Besides the above-mentioned zirconia and stabilizer, conventionally known additives and the like may be further contained within the bounds of not impairing the effect of the present invention.

The method for forming a heat-insulating layer using the above-mentioned raw materials is not particularly limited, but a spraying method is preferably employed. By employing the spraying method, the thermal conductivity of porous zirconia is easily adjusted to a desired range. Such a problem does not occur that air bubbles are excessively formed within porous zirconia, resulting in a considerable reduction in mechanical strength of the heat-insulating layer. Thus, by forming a heat-insulating layer by spraying, the structure of the heat-insulating layer becomes suitable for the intended use of the present invention.

For example, formation of a heat-insulating layer by spraying can be carried out in the manner described below. First, a raw material of the heat-insulating layer is melted into a liquid. The liquid is accelerated to collide against the inner surface of a cavity. Finally, the raw material that has collided against the inner surface of the cavity and deposited thereon is solidified. In this way, a very thin heat-insulating layer is formed on the inner surface of the mold. By further colliding the melted raw material onto the very thin heat-insulating layer and solidifying the same, the thickness of the heat-insulating layer can be adjusted. As a method for solidifying the raw material, conventionally known cooling means may be used, or the raw material may be merely left standing to be solidified. The spraying method is not particularly limited, and a preferred method can be appropriately selected from conventionally known methods such as arc spraying, plasma spraying and flame spraying.

The heat-insulating layer having a multilayered structure can be produced by adjusting production conditions for the heat-insulating layer. For example, when the heat-insulating layer is formed by the spraying method, the heat-insulating layer can be produced by adjusting a condition for depositing a melted raw material on the inner surface of the mold.

### EXAMPLES

Hereinafter, the present invention will be explained in further detail based on Examples; however, the present invention is not to be limited by these Examples.

### Example 1

In Example 1, the following materials were used.

Crystalline resin: polyphenylene sulfide resin (PPS resin) ("FORTRON 1140A64 (T_{c2}: 225°C) manufactured by Polyplastics Co., Ltd.)

A relationship between the crystallization rate (Log K (K represents a rate)) and the resin temperature (°C) of the above-mentioned crystalline resin is shown in FIG. 4. A temperature at which the crystallization rate is sufficiently fast is set to be 150°C or higher. A desired crystallinity was set to be 30%. heat-insulating layer: a polyimide resin (polyimide resin varnish (manufactured by Fine Chemical Japan Co., Ltd.) having a thermal conductivity of 0.2 W/m.K was sprayed, and baked at 250°C for an hour, followed by polishing the polyimide surface.)

Method for measurement of T_{c2}: using a differential scanning calorimeter (DSC 7 manufactured by PerkinElmer Inc.), a thermoplastic resin was retained at 340°C for 2 minutes under a nitrogen atmosphere, the resin temperature was then lowered at a rate of 10°C/minute, and a temperature corresponding to an exothermic peak was read from an obtained DSC chart and designated as T_{c2}.

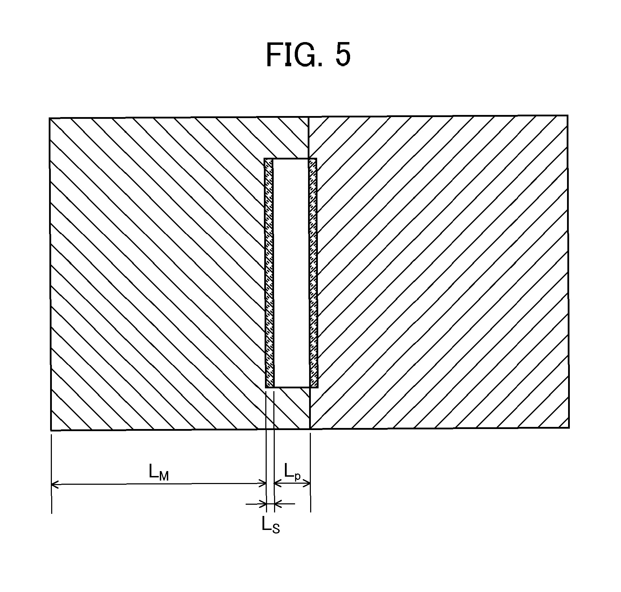

A mold as shown in FIG. 5 was used. L_{M} was 10 mm, L_{P} was 0.7 mm, and L_{S} was 0.06 mm.

The specific gravity, the specific heat, the thermal conductivity and the thermal diffusivity of a material constituting the mold and the crystalline resin were as follows. The thermal conductivity was calculated by measuring the thermal diffusivity by a laser flash method. The specific gravity was measured by an Archimedes method, and the specific heat was measured by DSC.

**[Table 1]**

| | Specific gravity (kg /m³) | Specific heat (J /(kg · K)) | Thermal conductivity (W/(m · K)) | Thermal diffusivity (m² · s ) |
|---|---|---|---|---|
| Metal material of mold | 7800 | 461 | 33.1 | 9.21 × 10⁻⁶ |
| Polyimide | 1270 | 1130 | 0.22 | 1.53 × 10⁻⁷ |
| PPS resin | 1500 | 1480 | 0.27 | 1.22 × 10⁻⁷ |

Therm 1 (one-dimensional heat conduction analysis software) was used to derive a relationship between the temperature of the resin at a depth of 7 µm from the cavity surface and the retention time of the resin within the mold under the condition of mold temperature shown in Table 2.

Also, measurement of the crystallinity under each molding condition was performed. Measurement of the crystallinity was performed for each of the side on which a heat-insulating layer was formed and the side on which no heat-insulating layer was formed. The results for the crystallinity are also shown in Table 2.

**[Table 2]**

| Mold temperature (°C) | Crystallinity(%) | |
|---|---|---|
| | Side on which heat-insulating layer is formed | Side on which no heat-insulating layer is formed |
| 140 | 38.9 | 33.9 |
| 100 | 31.4 | 15.1 |
| 80 | 21.8 | - |
| 60 | 14.4 | - |
| 40 | 10.4 | 0 |

| | | |
|---|---|---|
| * - **indicates that no measurement was performed.** | | |

The time during which the resin temperature was retained at 150°C or higher is shown for the mold temperature of 140°C, 100°C and 80°C. From the results in Tables 2 and 3, it has been confirmed that even when the condition of mold temperature is set at 100°C or less, a retention time during which the crystallinity can be adjusted to 30% or more is 0.1 seconds.

It has been confirmed that if a heat-insulating layer set through heat conduction analysis is provided on a mold, the crystallinity of the surface of a molded article can be adjusted to fall within a desired range even when the condition of mold temperature is set at 100°C.

**[Table 3]**

| Mold temperature (°C) | Presence/absence of heat-insulating layer | Time (seconds) during which resin was retained at 150°C or higher |
|---|---|---|
| 140 | Absent | 0.19 |
| 140 | Present | 0.36 |
| 100 | Present | 0.11 |
| 80 | Present | 0.07 |

### Example 2

A relationship between the temperature of the resin at a depth of 7 µm from the cavity surface and the retention time of the resin within the mold was derived in the same manner as in Example 1 except that the material of the heat-insulating layer was changed from polyimide to silicon dioxide (ceramic 1) and Lₛ = 2.5 mm or 5 mm. The time during which the resin temperature was retained at 150°C or higher, and the crystallinity at the side on which the heat-insulating layer was formed under each molding condition are shown in Table 4. Molding conditions for the derived relational expression are such that the mold temperature is 100°C and the thickness of the heat-insulating layer (ceramic 1) is 2.5 mm; and the mold temperature is 100°C and the thickness of the heat-insulating layer (ceramic 1) is 5 mm.

The specific gravity, the specific heat, the thermal conductivity and the thermal diffusivity of ceramic 1 were as follows. The thermal conductivity was calculated by measuring the thermal diffusivity by a laser flash method. The specific gravity was measured by an Archimedes method, and the specific heat was measured by DSC.
Specific gravity: 2520 (kg/m³)
Specific heat: 790 (J/(kg·K))
Thermal conductivity: 1.46 (W/(m·K))
Thermal diffusivity: 7.33 × 10⁻⁷ (m²·s)

**[Table 4]**

| Mold temperature (°C) | Thickness of heat-insulating layer (mm) | Time (seconds) during which resin was retained at 150°C or higher | Crystallinity (%) (side on which heat-insulating layer is formed) |
|---|---|---|---|
| 100 | 2.5 | 0.25 | 31.8 |
| 100 | 5 | 0.25 | 32.2 |

### Example 3

From Examples described above, it has been confirmed that by ensuring that a resin which flowed into a mold is retained at 150°C or higher for 0.1 seconds or more, the crystallinity can be adjusted to 30% or more.

In Example 3, Therm 1 (one-dimensional heat conduction analysis software) was used to derive the thickness of a heat-insulating layer, which allows a resin, which has flowed into a mold, to be retained at 150°C or higher for 0.1 seconds or more when the heat-insulating layer is changed to a porous zirconia layer (ceramic 2) obtained by spraying zirconia. For the mold, a mold as shown in FIG. 5 was contemplated as in Example 1. Namely, L_{M} = 10 mm and L_{P} = 0.7 mm. For the specific gravity, the specific heat, the thermal conductivity and the thermal diffusivity of a material constituting the mold and the resin, values shown in Table 5 were used.

**[Table 5]**

| | Specific gravity (kg/m³) | Specific heat (J /(kg · K)) | Thermal conductivity (W/(m · K)) | Thermal diffusivity (m² · s) |
|---|---|---|---|---|
| Metal material of mold | 7800 | 461 | 33.1 | 9.21 × 10⁻⁶ |
| Zirconia layer | 5860 | 465 | 0.96 | 3.52 × 10⁻⁷ |
| PPS resin | 1500 | 1480 | 0.27 | 1.22 × 10⁻⁷ |

Using Therm 1 (one-dimensional heat conduction analysis software), the relationship between the temperature of a resin at a depth of 7 µm from the cavity surface and the retention time of the resin within a mold was derived as in Example 1 for each thickness with the thickness of the heat-insulating layer being changed, and resultantly it was estimated that by setting the thickness of the heat-insulating layer at 500 µm, the resin which flowed into the mold would be retained at 150°C or higher for 0.1 seconds or more (estimated result: 0.49 seconds) under condition of mold temperature: 80°C. Then, a mold as shown in FIG. 5 with L_{M} = 10 mm, L_{P} = 0.7 mm and L_{S} = 500 µm was actually prepared. The method for forming a heat-insulating layer will be described later.

A molded article was prepared under the condition of mold temperature: 80°C using the prepared mold, and the crystallinity at the side on which the heat-insulating layer was formed was measured. Results for crystallinity are shown in Table 6.

**[Table 6]**

| Mold temperature (°C) | Thickness of heat-insulating layer (*µ*m) | Crystallinity (%) (side on which heat-insulating layer is formed) |
|---|---|---|
| 80 | 500 | 30.9 |

The thickness of the heat-insulating layer which allows the resin to be retained at 150°C or higher for 0.1 seconds or more is determined through heat conduction analysis, and a heat-insulating layer having the determined thickness is provided on a mold to produce a mold for molding. When a mold is produced in this way, and molding is performed under set molding conditions (for example, mold temperature: 80°C), a molded article having a desired crystallinity can be obtained.

### Formation of heat-insulating layer

A raw material constituted mainly by zirconia was sprayed onto the inner surface of the mold by a spraying method. The surface of the heat-insulating layer was adjusted so as to have an increased density, and a heat-insulating layer having a multilayered structure was formed on the inner surface of the mold. Spraying was continued until the heat-insulating layer had a thickness of 500 µm.

As a result of actually performing measurement, the specific gravity, the specific heat, the thermal conductivity and the thermal diffusivity of a material constituting the mold and the crystalline resin were as shown in Table 5. The thermal conductivity of the zirconia heat-insulating layer was calculated by measuring the thermal diffusivity by a laser flash method, measuring the specific heat by DSC, measuring the specific gravity by a method of collecting a gas over water (conforming to JIS Z8807 Solid Specific Gravity Measurement Method), and following the equation of [thermal conductivity] = [thermal diffusivity × specific heat × specific gravity].

The thermal conductivity (λ) of the heat-insulating layer having a multilayered structure was determined by determining the thermal conductivity of each of the low-density layer and the high-density layer, and conducting calculation using the equation of [1/λ] = [t/λl] + [(1-t)/λh] where the thermal conductivity of the low-density layer is λl, the thermal conductivity of the high-density layer is λh and the ratio of the thickness of the low-density layer to the thickness of the entire heat-insulating layer is t.

From Examples 2 and 3, it has been confirmed that if a heat-insulating layer (ceramic) set through heat conduction analysis is provided on a mold, the crystallinity of the surface of a molded article can be made to fall within a desired range even when the condition of mold temperature is set at 100°C.

## Claims

1. A method for manufacturing a mold for molding a molded article made of a resin composition comprising a crystalline thermoplastic resin, the method comprising:
deriving, based on a relationship between crystallization rate and resin temperature of a crystalline thermoplastic resin, a temperature at which the crystalline thermoplastic resin filled into a mold has a sufficiently fast crystallization rate near a mold cavity surface and a retention time during which the crystalline thermoplastic resin in the mold is retained at a temperature equal to at least at a temperature at which the resin has a sufficiently fast crystallization rate, such that the derived temperature and the derived retention time allow said molded article to have a surface whose crystallinity falls within a desired range, and
providing a heat-insulating layer which, when mold temperature is T_{c2}-100°C or less, allows a time, during which temperature near surface of the mold cavity is retained at no less than the derived temperature, to fulfill said derived retention time.

2. The method for manufacturing a mold according to Claim 1, wherein said mold temperature is 100°C or less;
and when said crystalline thermoplastic resin is a polyarylene sulfide-based resin,
said temperature near the cavity surface is 150°C or higher;
and said retention time is 0.1 seconds or longer.

3. The method for manufacturing a mold according to Claims 1 or 2, further comprising deriving a relationship between said temperature near the cavity surface and said retention time by heat conduction analysis, and determining material, placement position and shape of said heat-insulating layer based on said relationship,
wherein said heat conduction analysis is performed by using a mold having a cavity on the surface of which a heat-insulating layer is formed, and by using as parameters specific gravity, specific heat, thermal conductivity and thermal diffusivity of material constituting said mold and of said crystalline thermoplastic resin.

4. The method for manufacturing a mold according to any one of Claims 1 to 3, wherein said heat-insulating layer has a thermal conductivity of 0.3 W/m·K or less and a thickness of 60 µm or greater.

5. The method for manufacturing a mold according to any one of Claims 1 to 4, wherein said heat-insulating layer comprises at least one resin selected from polybenzoimidazole, polyimide, and polyether ether ketone.

6. The method for manufacturing a mold according to any one of Claims 1 to 5, wherein said heat-insulating layer has a metal layer on the surface thereof.

7. The method for manufacturing a mold according to any one of Claims 1 to 6, wherein said heat-insulating layer comprises a ceramic.

8. The method for manufacturing a mold according to Claim 7, wherein said ceramic is silicon dioxide.

9. The method for manufacturing a mold according to Claim 7, wherein said ceramic is constituted by porous zirconia.

10. The method for manufacturing a mold according to any one of Claims 1 to 9, wherein said mold temperature is T_{c1} or less.

11. A molded article of a polyarylene sulfide-based resin having a crystallinity of 30% or more, the molded article being obtained using a mold prepared by the method according to any one of Claims 1 to 10.
